# EUROPEAN PATENT APPLICATION

(11) **EP 2 816 457 A1**
(43) Date of publication of application: **24.12.2014**
(21) Application number: 12888317.0
(22) Date of filing: 13.11.2012
(51) Int. Cl.: G06F 3/0481

(54) **METHOD FOR DISPLAYING INTERFACE, AND TERMINAL DEVICE**

(71) Applicant: Huawei Technologies Co., Ltd, Shenzhen, Guangdong 518129 (CN)
(72) Inventor: FAN, Shaoting, Shenzhen Guangdong 518129 (CN)
(74) Representative: Thun, Clemens
(86) International application number: PCT/CN2012/084544
(87) International publication number: WO 2014/075226

(57) **Abstract**

Embodiments of the present invention relate to the display field, and disclose an interface display method and a terminal device, which can improve distinguishability between a frequently used target object and an occasionally used target object. The interface display method includes: receiving a selection signal; acquiring a target object corresponding to the selection signal according to the selection signal; according to a predetermined first display attribute change rule, acquiring an initial display attribute of the target object, and modifying the initial display attribute of the target object to a target display attribute; and displaying the acquired target object according to the target display attribute, and storing the target display attribute of the target object until the target display attribute is modified.

## Description

### TECHNICAL FIELD

The present invention relates to the display field, and in particular, to an interface display method and a terminal device.

### BACKGROUND

With rapid development of communications technologies, functions of a terminal device (such as a mobile phone, a tablet computer, or a desktop computer) are increasing and are becoming increasingly more humanized, and correspondingly, user experience is enhanced.

However, in an implementation process of the present invention, the inventor finds that because all target objects in a menu of a terminal device are basically icons of an equal size, distinguishability of target objects is low. When a user is to select a target object by touching, the user cannot quickly distinguish a desired target object among multiple target objects, which affects user experience. Especially, when the user needs to frequently use a target object, a misoperation probability of the user increases greatly due to low distinguishability between the target objects, which deteriorates user experience of using a portable terminal device.

### SUMMARY

A technical problem that the present invention intends to resolve is to provide an interface display method and a terminal device to improve distinguishability between target objects.

To resolve the foregoing technical problem, a first aspect of the present invention provides an interface display method, where the following technical solution is adopted:
receiving a selection signal;
acquiring a target object corresponding to the selection signal according to the selection signal;
acquiring an initial display attribute of the target object, and modifying the initial display attribute of the target object to a target display attribute according to a predetermined first display attribute change rule; and
displaying the acquired target object according to the target display attribute, and storing the target display attribute of the target object.

In a first possible implementation manner of the first aspect of the present invention, the interface display method further includes: according to a predetermined second display attribute change rule, acquiring the target display attribute of the target object and restoring the target display attribute to the initial display attribute; and
displaying the acquired target object according to the initial display attribute, and storing the initial display attribute of the target object.

In a second possible implementation manner of the first aspect of the present invention, the interface display method further includes: storing a time point at which the selection signal is received; and
the according to a predetermined second display attribute change rule, acquiring the target display attribute of the target object and restoring the target display attribute to the initial display attribute, include:
acquiring the target display attribute of the target object within a predetermined time range that starts from the time point at which the selection signal is received, and restoring the target display attribute of the target object to the initial display attribute.

In a third possible implementation manner of the first aspect of the present invention, the acquiring the target display attribute of the target object within a predetermined time range, and restoring the target display attribute of the target object to the initial display attribute, specifically include:
successively acquiring the target display attributes of the target object at even time intervals within the predetermined time range, and updating the target display attributes at a same modification period until the target display attributes of the target object are restored to the initial display attribute.

In a fourth possible implementation manner of the first aspect of the present invention, the acquiring the target display attribute of the target object within a predetermined time range, and restoring the target display attribute of the target object to the initial display attribute, specifically include:
successively acquiring the target display attributes of the target object at even time intervals within the predetermined time range, and restoring, in a reverse manner of the first display attribute change rule, a current target display attribute of the target object, which is acquired each time, to a previous target display attribute, until the target display attribute of the target object is restored to the initial display attribute.

In a fifth possible implementation manner of the first aspect of the present invention, the modifying the initial display attribute of the target object to a target display attribute according to a predetermined first display attribute change rule includes:
modifying a size parameter, a color level parameter or a dynamic parameter in the initial display attribute of the target object, and using the modified size parameter, color level parameter or dynamic parameter as the target display attribute of the target object; or
modifying a combination of any two or three of, the size parameter, the color level parameter and the dynamic parameter in the initial display attribute of the target object, and using the combination of any two or three of, the modified size parameter, color level parameter and dynamic parameter as the target display attribute of the target object.

In a sixth possible implementation manner of the first aspect of the present invention, the target objects include at least a virtual key target object, a text target object, a contact target object, and an icon target object or a picture target object.

In a technical solution of this embodiment, an interface display method is provided. When a user uses a terminal device, the terminal device can modify an initial display attribute of a selected target object to a target display attribute according to a predetermined first display attribute change rule, and display the target object according to a modified target display attribute. In this way, a display effect of the target object is changed, distinguishability between the target object and another target object is improved, a probability of the user's misoperation caused by low distinguishability between the target objects is reduced, and user experience is enhanced.

A second aspect of the present invention provides a terminal device, where the following technical solution is adopted:

The terminal device includes:
a receiving module, configured to receive a selection signal;
an acquiring module, configured to acquire a target object corresponding to the selection signal according to the selection signal;
a first modifying module, configured to acquire an initial display attribute of the target object, and modify the initial display attribute of the target object to a target display attribute according to a predetermined first display attribute change rule; and
a display and storage module, configured to display the acquired target object according to the target display attribute, and store the target display attribute of the target object until the target display attribute is modified.

In a first possible implementation manner of the second aspect of the present invention, the terminal device further includes:
a second modifying module, configured to, according to a predetermined second display attribute change rule, acquire the target display attribute of the target object and restore the target display attribute to the initial display attribute, where
the display and storage module is further configured to display the acquired target object according to the initial display attribute, and store the initial display attribute of the target object.

In a second possible implementation manner of the second aspect of the present invention, the display and storage module is further configured to store a time point at which the selection signal is received; and
the second modifying module is specifically configured to acquire the target display attribute of the target object within a predetermined time range that starts from the time point at which the selection signal is received, and restore the target display attribute of the target object to the initial display attribute.

In a third possible implementation manner of the second aspect of the present invention, the second modifying module is specifically configured to:
successively acquire the target display attributes of the target object at even time intervals within the predetermined time range that starts from the time point at which the selection signal is received, and update the target display attributes at a same modification period until the target display attributes of the target object are restored to the initial display attribute.

In a fourth possible implementation manner of the second aspect of the present invention, the second modifying module is specifically configured to:
successively acquire the target display attributes of the target object at even time intervals within the predetermined time range that starts from the time point at which the selection signal is received, and restore, in a reverse manner of the first display attribute change rule, a current target display attribute of the target object, which is acquired each time, to a previous target display attribute, until the target display attribute of the target object is restored to the initial display attribute.

In a fifth possible implementation manner of the second aspect of the present invention, the first modifying module is specifically configured to:
modify a size parameter, a color level parameter or a dynamic parameter in the initial display attribute of the target object, and use the modified size parameter, color level parameter or dynamic parameter as the target display attribute of the target object; or
modify a combination of any two or three of, the size parameter, the color level parameter and the dynamic parameter in the initial display attribute of the target object, and use the combination of any two or three of, the modified size parameter, color level parameter and dynamic parameter as the target display attribute of the target object.

In a sixth possible implementation manner of the second aspect of the present invention, the target objects include at least a virtual key target object, a text target object, a contact target object, and an icon target object or a picture target object.

In a technical solution of this embodiment, a terminal device is provided. When a user uses the terminal device, a first modifying module of the terminal device can modify an initial display attribute of a selected target object to a target display attribute according to a predetermined first display attribute change rule, and a display module displays the target object according to a modified target display attribute. In this way, a display effect of the target object is changed, distinguishability between the target object and another target object is improved, a probability of the user's misoperation caused by low distinguishability between the target objects is reduced, and user experience is enhanced.

A third aspect of the present invention provides a terminal device, where the following technical solution is adopted:

The terminal device includes:
a central processing unit, configured to receive a selection signal, acquire a target object corresponding to the selection signal according to the selection signal, acquire an initial display attribute of the target object, and modify the initial display attribute of the target object to a target display attribute according to a predetermined first display attribute change rule;
a display apparatus, configured to display the acquired target object according to the target display attribute; and
a memory, configured to store the target display attribute of the target object.

In a first possible implementation manner of the third aspect of the present invention, the central processing unit is further configured to, according to a predetermined second display attribute change rule, acquire the target display attribute of the target object and restore the target display attribute to the initial display attribute;
the display apparatus is further configured to display the acquired target object according to the initial display attribute; and
the memory is further configured to store the initial display attribute of the target object.

In a second possible implementation manner of the third aspect of the present invention, the memory is further configured to store a time point at which the selection signal is received; and
the central processing unit is specifically configured to, according to a predetermined second display attribute change rule, acquire the target display attribute of the target object within a predetermined time range that starts from the time point at which the selection signal is received, and restore the target display attribute of the target object to the initial display attribute.

In a third possible implementation manner of the third aspect of the present invention, the central processing unit is specifically configured to: successively acquire the target display attributes of the target object at even time intervals within the predetermined time range that starts from the time point at which the selection signal is received, and update the target display attributes at a same modification period until the target display attributes of the target object are restored to the initial display attribute.

In a fourth possible implementation manner of the third aspect of the present invention, the central processing unit is specifically configured to:
successively acquire the target display attributes of the target object at even time intervals within the predetermined time range that starts from the time point at which the selection signal is received, and restore, in a reverse manner of the first display attribute change rule, a current target display attribute of the target object, which is acquired each time, to a previous target display attribute, until the target display attribute of the target object is restored to the initial display attribute.

In a fifth possible implementation manner of the third aspect of the present invention, the central processing unit is specifically configured to:
modify a size parameter, a color level parameter or a dynamic parameter in the initial display attribute of the target object, and use the modified size parameter, color level parameter or dynamic parameter as the target display attribute of the target object; or
modify a combination of any two or three of, the size parameter, the color level parameter and the dynamic parameter in the initial display attribute of the target object, and use the combination of any two or three of, the modified size parameter, color level parameter and dynamic parameter as the target display attribute of the target object.

In a sixth possible implementation manner of the third aspect of the present invention,
the target objects include at least a virtual key target object, a text target object, a contact target object, and an icon target object or a picture target object.

In a technical solution of this embodiment, a terminal device is provided. When a user uses the terminal device, a central processing unit of the terminal device can modify an initial display attribute of a selected target object to a target display attribute according to a predetermined first display attribute change rule, and a display apparatus displays the target object according to the modified target display attribute. In this way, a display effect of the target object is changed, distinguishability between the target object and another target object is improved, a probability of the user's misoperation caused by low distinguishability between the target objects is reduced, and user experience is enhanced.

A fourth aspect of the present invention provides an interface display method, where the following technical solution is adopted:
receiving a selection signal;
acquiring a target object corresponding to the selection signal according to the selection signal;
acquiring at least two display attributes corresponding to the selected target object;
activating one display attribute in the at least two display attributes according to a predetermined first display attribute activation rule; and
displaying the acquired target object according to the activated target display attribute, and storing the target display attribute of the target object.

In a first possible implementation manner of the fourth aspect of the present invention, the interface display method further includes: according to a predetermined second display attribute activation rule, deactivating the activated display attribute and activating another display attribute in the at least two display attributes; and
displaying the acquired target object according to the activated another display attribute.

In a second possible implementation manner of the fourth aspect of the present invention, the interface display method further includes: storing a time point at which the selection signal is received; and
the according to a predetermined second activated attribute change rule, deactivating the activated display attribute and activating another display attribute in the at least two display attributes, include:
within a predetermined time range that starts from the time point at which the selection signal is received, deactivating the activated display attribute and activating the another display attribute in the at least two display attributes.

In a third possible implementation manner of the fourth aspect of the present invention, at least one attribute in the at least two display attributes includes:
a size parameter, a color level parameter or a dynamic parameter of the target object; or
a combination of any two or three of, the size parameter, the color level parameter and the dynamic parameter of the target object.

In a fourth possible implementation manner of the fourth aspect of the present invention, the predetermined first display attribute change rule includes:
the target objects include at least a virtual key target object, a text target object, a contact target object, and an icon target object or a picture target object.

In a technical solution of this embodiment, an interface display method is provided. When a user uses a terminal device, the terminal device can, according to a predetermined first display attribute activation rule, acquire at least two display attributes for subsequent use and activate one of the display attributes, and display the acquired target object according to the activated target display attribute. In this way, a display effect of the target object is changed, distinguishability between the target object and another target object is improved, a probability of the user's misoperation caused by low distinguishability between the target objects is reduced, and user experience is enhanced.

A fifth aspect of the present invention provides a terminal device, where the following technical solution is adopted:

The terminal device includes:
a receiving module, configured to receive a selection signal;
an acquiring module, configured to acquire a target object corresponding to the selection signal according to the selection signal, and acquire at least two display attributes corresponding to the selected target object;
a first activating module, configured to activate one display attribute in the at least two display attributes according to a predetermined first display attribute activation rule; and
a display module, configured to display the acquired target object according to the target display attribute, and store the target display attribute of the target object until the target display attribute is deactivated.

In a first possible implementation manner of the fifth aspect of the present invention, the terminal device further includes:
a second activating module, configured to, according to a predetermined second display attribute activation rule, deactivate the activated display attribute and activate another display attribute in the at least two display attributes, where
the display and storage module is further configured to display the acquired target object according to the activated another display attribute.

In a second possible implementation manner of the fifth aspect of the present invention, the terminal device further includes: a storage module, where
the storage module is configured to store a time point at which the selection signal is received; and
the second activating module is specifically configured to, within a predetermined time range that starts from the time point at which the selection signal is received, deactivate the activated display attribute and activate the another display attribute in the at least two display attributes.

In a third possible implementation manner of the fifth aspect of the present invention, at least one attribute in the at least two display attributes includes:
a size parameter, a color level parameter or a dynamic parameter of the target object; or
a combination of any two or three of, the size parameter, the color level parameter and the dynamic parameter of the target object.

In a fourth possible implementation manner of the fifth aspect of the present invention, the target objects include at least a virtual key target object, a text target object, a contact target object, and an icon target object or a picture target object.

In a technical solution of this embodiment, a terminal device is provided. When a user uses the terminal device, the terminal device can, according to a predetermined first display attribute activation rule, acquire at least two display attributes for subsequent use and activate one of the display attributes, and display the acquired target object according to the activated target display attribute. In this way, a display effect of the target object is changed, distinguishability between the target object and another target object is improved, a probability of the user's misoperation caused by low distinguishability between the target objects is reduced, and user experience is enhanced.

A sixth aspect of the present invention provides a terminal device, where the following technical solution is adopted:

The terminal device includes:
a central processing unit, configured to receive a selection signal, acquire a target object corresponding to the selection signal according to the selection signal, acquire at least two display attributes corresponding to the selected target object, and activate one display attribute in the at least two display attributes according to a predetermined first display attribute activation rule; and
a display apparatus, configured to display the acquired target object according to the activated target display attribute.

In a first possible implementation manner of the sixth aspect of the present invention, the central processing unit is further configured to, according to a predetermined second display attribute activation rule, deactivate the activated display attribute and activate another display attribute in the at least two display attributes; and
the display apparatus is further configured to display the acquired target object according to the activated another display attribute.

In a second possible implementation manner of the sixth aspect of the present invention, the memory is further configured to store a time point at which the selection signal is received; and
the central processing unit is specifically configured to, within a predetermined time range that starts from the time point at which the selection signal is received, deactivate the activated display attribute and activate the another display attribute in the at least two display attributes.

In a third possible implementation manner of the sixth aspect of the present invention, at least one attribute in the at least two display attributes includes:
a size parameter, a color level parameter or a dynamic parameter of the target object; or
a combination of any two or three of, the size parameter, the color level parameter and the dynamic parameter of the target object.

In a fourth possible implementation manner of the sixth aspect of the present invention,
the target objects include at least a virtual key target object, a text target object, a contact target object, and an icon target object or a picture target object.

In a technical solution of this embodiment, a terminal device is provided. When a user uses the terminal device, the terminal device can modify a display attribute of a target object according to a preset rule. In this way, a display effect of the target object is changed, distinguishability between the target object and another target object is improved, a probability of the user's misoperation caused by low distinguishability between the target objects is reduced, and user experience is enhanced.

### BRIEF DESCRIPTION OF DRAWINGS

FIG. 1 is a first flowchart of an interface display method according to an embodiment of the present invention;
FIG. 2 is a second flowchart of an interface display method according to an embodiment of the present invention;
FIG. 3 is a third flowchart of an interface display method according to an embodiment of the present invention;
FIG. 4 is a first schematic structural diagram of a terminal device according to an embodiment of the present invention;
FIG. 5 is a schematic plan drawing of a terminal device according to an embodiment of the present invention;
FIG. 6 is a second schematic structural diagram of a terminal device according to an embodiment of the present invention;
FIG. 7 is a third schematic structural diagram of a terminal device according to an embodiment of the present invention;
FIG. 8 is a fourth flowchart of an interface display method according to an embodiment of the present invention;
FIG. 9 is a fifth flowchart of an interface display method according to an embodiment of the present invention;
FIG. 10 is a sixth flowchart of an interface display method according to an embodiment of the present invention; and
FIG. 11 is a fourth schematic structural diagram of a terminal device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

### Embodiment 1

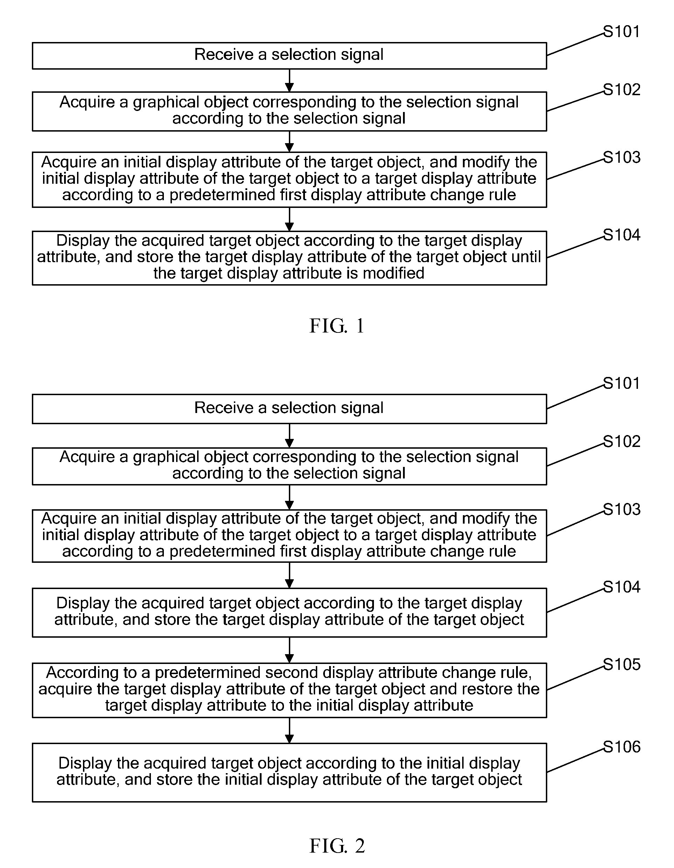

This embodiment of the present invention provides an interface display method. As shown in FIG. 1, the interface display method includes the following steps:
Step S101: Receive a selection signal.

When a user performs an operation on a visible target object, for example, when a user whose terminal device is a personal computer uses a mouse to click a target object, or a user whose terminal device has a touchscreen taps a target object, the terminal device can receive a selection signal corresponding to the user operation. Generally, the selection signal may be a coordinate value on a page currently displayed on the terminal device.

Generally, the target object refers to a visible object that independently exists and is operable in a software environment, where "operable" means that the object is selectable or can respond to a selection or a click or tap of the user.
Step S102: Acquire a target object corresponding to the selection signal according to the selection signal.

According to the selection signal, and by performing certain processing and conversion, the terminal device can lock the target object of the selection signal as a target object to be operated by the user. For example, when the selection signal is a coordinate value, the terminal device locks and acquires the target object corresponding to the selection signal according to a correspondence between the coordinate value and the target object, where the correspondence is stored on the terminal device.
Step S103: Acquire an initial display attribute of the target object, and modify the initial display attribute of the target object to a target display attribute according to a predetermined first display attribute change rule.

After the target object corresponding to the selection signal is acquired according to step S102, the initial display attribute of the target object is acquired, where the initial display attribute includes at least one or more of: a color attribute, a shape attribute, a size attribute, and a dynamic attribute of the target object. Similarly, the target display attribute includes at least one or more of: the color attribute, the shape attribute, the size attribute, and the dynamic attribute of the target object. The target display attribute is generally different from the initial display attribute.
Step S104: Display the acquired target object according to the target display attribute, and store the target display attribute of the target object.

After step S103, the display attribute of the target object is modified from the initial display attribute to the target display attribute. From the user's perspective, the modification of the display attribute is reflected by a change of a display effect of the target object before and after an operation is performed on the target object. For example, the color of the target object has modified, the size has modified, or the target object is jiggling. When entering the display interface of the terminal device next time, the user can notice the previously operated target object at the first moment, which improves distinguishability of the target object, reduces a misoperation probability of the user, and enhances user experience.

It should be noted that a current initial display attribute of the target object may be a target display attribute stored after a previous operation. When no operation has been performed on the target object, the current initial display attribute of the target object is an original display attribute of the target object.

In a technical solution of this embodiment, an interface display method is provided. When a user uses a terminal device, the terminal device can modify an initial display attribute of a selected target object to a target display attribute according to a predetermined first display attribute change rule, and display the target object according to a modified target display attribute. In this way, a display effect of the target object is changed, distinguishability between the target object and another target object is improved, a probability of the user's misoperation caused by low distinguishability between the target objects is reduced, and user experience is enhanced.

### Embodiment 2

Based on the interface display method disclosed in Embodiment 1, as shown in FIG. 2, the interface display method further includes the following steps:
Step S105: According to a predetermined second display attribute change rule, acquire the target display attribute of the target object and restore the target display attribute to the initial display attribute.

When the target object has only one target display attribute, that is, when the current target display attribute has been modified only once, that is, the initial display attribute of the target object is its original display attribute, the target display attribute of the target object can be restored, at one time, to the initial display attribute of the target display attribute, or the original display attribute, according to the predetermined second display attribute change rule.

When the current target display attribute of the target object is acquired after being modified multiple times, the target display attribute is restored, at multiple times, to the initial display attribute of the target display attribute, or the original display attribute, according to the predetermined second display attribute change rule.
Step S106: Display the acquired target object according to the initial display attribute, and store the initial display attribute of the target object.

In this case, the display effect seen by the user is the display effect corresponding to the initial display attribute of the target object.

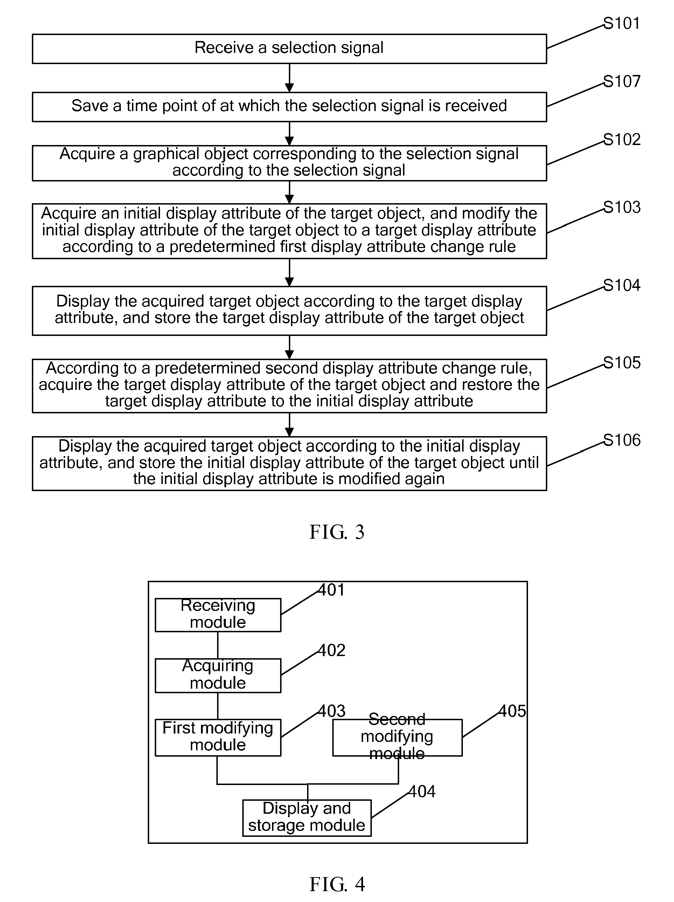

Further, as shown in FIG. 3, between step S101 and step S102, the interface display method further includes:
Step S107: Store a time point at which the selection signal is received.

The time point of the selection signal is used as a reference time point for implementing the second display attribute change rule.

In this case, step S105 may be specifically:
acquiring the target display attribute of the target object within a predetermined time range that starts from the time point at which the selection signal is received, and restoring the target display attribute of the target object to the initial display attribute.

When the target object has only one target display attribute and the predetermined time range is seven days, the time point at which the user performs the operation on the target object, that is, the time point at which the terminal device receives the corresponding selection signal, is used as a start time point. If the user performs no more operation on this specific target object in seven days after the start time point, the display attribute of the target object is restored to the initial display attribute, that is, the original display attribute, after the seven days.

When the current target display attribute of the target object is acquired after being modified multiple times, that is, the target object has multiple target display attributes, after the predetermined time range, the target display attribute of the target object may be restored, at one time, to the initial display attribute, or be ultimately restored, after multiple conversions, to the initial display attribute.

The predetermined time range may be set by the user. If the user does not set the time range, the terminal device performs processing according to a time range preset in the terminal device.

Specifically, when the target object has multiple target display attributes, the target display attribute of the target object may be restored to the initial display attribute by using at least the following two methods:

Method 1: Successively acquiring target display attributes of the target object at even time intervals within the predetermined time range, and updating the target display attributes at a same modification period until the target display attributes of the target object are restored to the initial display attribute.

It is assumed that the current target display attribute is acquired after the initial display attribute of the current target object is modified five times according to the first display attribute change rule. Specifically, the initial display attribute is modified to a target display attribute A, the target display attribute A is modified to a target display attribute B, the target display attribute B is modified to a target display attribute C, the target display attribute C is modified to a target display attribute D, and the target display attribute D is modified to a target display attribute E. To restore the target display attribute E to the initial display attribute, the target display attribute obtained within each predetermined time range needs to be converted after each predetermined time range. The specific conversion of the target display attribute needs to undergo four stages: target display attributes A, B, C, and D, and the target display attributes A, B, C, and D appear in a random order, and the current target display attribute is ultimately converted to the initial display attribute.

Method 2: Successively acquiring the target display attributes of the target object at even time intervals within the predetermined time range, and restoring, in a reverse manner of the first display attribute change rule, a current target display attribute of the target object, which is acquired each time, to a previous target display attribute, until the target display attribute of the target object is restored to the initial display attribute.

It is assumed that the current target display attribute is acquired after the initial display attribute of the current target object is modified five times according to the first display attribute change rule. Specifically, the initial display attribute is modified to a target display attribute A, the target display attribute A is modified to a target display attribute B, the target display attribute B is modified to a target display attribute C, the target display attribute C is modified to a target display attribute D, and the target display attribute D is modified to a target display attribute E. To restore the target display attribute E to the initial display attribute, the target display attribute obtained within each predetermined time range needs to be converted after each predetermined time range. Specifically, the target display attribute E is reversely modified to the target display attribute D, the target display attribute D is reversely modified to the target display attribute C, the target display attribute C is reversely modified to the target display attribute B, the target display attribute B is reversely modified to the target display attribute A, and the target display attribute A is reversely modified to the initial display attribute.

It should be noted that modifying the initial display attribute of the target object to a target display attribute according to a predetermined first display attribute change rule includes at least:
modifying a size parameter, a color level parameter or a dynamic parameter in the initial display attribute of the target object, and using the modified size parameter, color level parameter or dynamic parameter as the target display attribute of the target object; or
modifying a combination of any two or three of, the size parameter, the color level parameter and the dynamic parameter in the initial display attribute of the target object, and using the combination of any two or three of, the modified size parameter, color level parameter and dynamic parameter as the target display attribute of the target object.

The user can modify the first display attribute change rule at the user's discretion.

Similarly, the predetermined second display attribute change rule includes at least:
modifying the size parameter of the target object, or modifying the color level parameter of the target object, or modifying the dynamic parameter of the target object; or
modifying a combination of any two or three of, the size parameter of the target object, the color level parameter of the target object and the dynamic parameter of the target object.

The user can also modify the second display attribute change rule at the user's discretion. A change caused by the second display attribute change rule may be a reverse of a change caused by the first display attribute change rule.

It should be noted that the foregoing target objects may further include various target objects, such as a virtual key target object, a text target object, and a folder target object, supported by the terminal device, which is not limited in the present invention.

In addition, the terminal device may be an intelligent terminal such as a mobile phone or a computer, or may be a non-terminal, for example, a virtual keyboard.

### Embodiment 3

This embodiment of the present invention provides a terminal device. The terminal device may be a mobile terminal with a touchscreen. As shown in FIG. 4, the terminal device includes the following parts.

A receiving module 401 is configured to receive a selection signal.

When a user performs an operation on a visible target object, for example, when a user whose terminal device is a personal computer uses a mouse to click a target object, or a user whose terminal device has a touchscreen taps a target object, the receiving module 401 can receive a selection signal corresponding to the user operation. Generally, the selection signal may be a coordinate value on a page currently displayed on the terminal device.

Generally, the target object refers to a visible object that independently exists and is operable in a software environment, where "operable" means that the object is selectable or can respond to a selection or a click or tap of the user.

An acquiring module 402 is configured to acquire a target object corresponding to the selection signal according to the selection signal.

According to the selection signal, and by performing certain processing and conversion, the acquiring module 402 can lock the target object of the selection signal as a target object to be operated by the user. For example, when the selection signal is a coordinate value, the acquiring module 402 locks and acquires the target object corresponding to the selection signal according to a correspondence between the coordinate value and the target object, where the correspondence is stored on the terminal device.

A first modifying module 403 is configured to acquire an initial display attribute of the target object, and modify the initial display attribute of the target object to a target display attribute according to a predetermined first display attribute change rule.

After the acquiring module 402 acquires the target object corresponding to the selection signal, the first modifying module 403 acquires the initial display attribute of the target object, and modifies the initial display attribute of the target object according to the predetermined first display attribute change rule, so that the target display attribute is modified to the target display attribute. The initial display attribute includes at least one or more of: a color attribute, a shape attribute, a size attribute, and a dynamic attribute of the target object. Similarly, the target display attribute includes at least one or more of: the color attribute, the shape attribute, the size attribute, and the dynamic attribute of the target object. The target display attribute is generally different from the initial display attribute.

A display and storage module 404 is configured to display the acquired target object according to the target display attribute, and store the target display attribute of the target object.

After the selected target object is processed by the first modifying module 403, from the user's perspective, the modification of the display attribute of the target object is reflected by a change of a display effect of the target object before and after an operation is performed on the target object. For example, the color of the target object has modified, the size has modified, or the target object is jiggling. When entering the display interface of the terminal device next time, the user can notice the previously operated target object at the first moment, which improves distinguishability of the target object, reduces a misoperation probability of the user, and enhances user experience.

It should be noted that a current initial display attribute of the target object may be a target display attribute stored after a previous operation. When no operation has been performed on the target object, the current initial display attribute of the target object is an original display attribute of the target object.

The terminal device further includes:
a second modifying module 405, configured to, according to a predetermined second display attribute change rule, acquire the target display attribute of the target object and restore the target display attribute to the initial display attribute.

When the target object has only one target display attribute, that is, when the current target display attribute has been modified only once, that is, the initial display attribute of the target object is its original display attribute, the second modifying module 405 can restore, at one time, the target display attribute of the target object to the initial display attribute of the target display attribute, or the original display attribute, according to the predetermined second display attribute change rule.

When the current target display attribute of the target object is acquired after being modified multiple times, the second modifying module 405 restores, at multiple times, the target display attribute to the initial display attribute of the target display attribute, or the original display attribute, according to the predetermined second display attribute change rule.

The display and storage module 406 is further configured to display the acquired target object according to the initial display attribute, and store the initial display attribute of the target object.

In this case, the display effect seen by the user is the display effect corresponding to the initial display attribute of the target object.

Further, the display and storage module 406 is further configured to store a time point at which the selection signal is received.

The time point at which the selection signal is received is used as a reference time point for implementing the second display attribute change rule.

In this case, the second modifying module 405 is specifically configured to acquire the target display attribute of the target object within a predetermined time range that starts from the time point at which the selection signal is received, and restore the target display attribute of the target object to the initial display attribute.

After the predetermined time range that starts from the time point at which the selection signal is received and the target display attribute of the target object is acquired, the target display attribute of the target object is restored to the initial display attribute.

When the target object has only one target display attribute and the predetermined time range is seven days, the time point at which the user performs the operation on the target object, that is, the time point at which the terminal device receives the corresponding selection signal, is used as a start time point. If the user performs no more operation on this specific target object in seven days after the start time point, the display attribute of the target object is restored by the second modifying module 405 to the initial display attribute, that is, the original display attribute, after the seven days.

When the current target display attribute of the target object is acquired after being modified multiple times, that is, the target object has multiple target display attributes, after the predetermined time range, the second modifying module 405 can restore, at one time, the target display attribute of the target object to the initial display attribute, or ultimately restore, after multiple conversions, the target display attribute of the target object to the initial display attribute.

The predetermined time range may be set by the user. If the user does not set the time range, the second modifying module 405 performs processing according to a time range preset in the terminal device.

Specifically, when the target object has multiple target display attributes, the second modifying module 405 can restore the target display attribute of the target object to the initial display attribute by using at least the following two methods:
Method 1: Successively acquiring the target display attributes of the target object at even time intervals within the predetermined time range, and updating the target display attributes at a same modification period until the target display attributes of the target object are restored to the initial display attribute.

It is assumed that the current target display attribute is acquired after the initial display attribute of the current target object is modified five times according to the first display attribute change rule. Specifically, the initial display attribute is modified to a target display attribute A, the target display attribute A is modified to a target display attribute B, the target display attribute B is modified to a target display attribute C, the target display attribute C is modified to a target display attribute D, and the target display attribute D is modified to a target display attribute E. To restore the target display attribute E to the initial display attribute, the second modifying module 405 needs to convert the target display attribute obtained within each predetermined time range after each predetermined time range. The specific conversion of the target display attribute needs to undergo four stages: target display attributes A, B, C, and D, and the target display attributes A, B, C, and D appear in a random order, and the initial display attribute is ultimately restored.
Method 2: Successively acquiring the target display attributes of the target object at even time intervals within the predetermined time range, and restoring, in a reverse manner of the first display attribute change rule, a current target display attribute of the target object, which is acquired each time, to a previous target display attribute, until the target display attribute of the target object is restored to the initial display attribute.

It is assumed that the current target display attribute is acquired after the initial display attribute of the current target object is modified five times according to the first display attribute change rule. Specifically, the initial display attribute is modified to a target display attribute A, the target display attribute A is modified to a target display attribute B, the target display attribute B is modified to a target display attribute C, the target display attribute C is modified to a target display attribute D, and the target display attribute D is modified to a target display attribute E. To restore the target display attribute E to the initial display attribute, the target display attribute obtained within each predetermined time range needs to be converted after each predetermined time range. Specifically, the target display attribute E is reversely modified to the target display attribute D, the target display attribute D is reversely modified to the target display attribute C, the target display attribute C is reversely modified to the target display attribute B, the target display attribute B is reversely modified to the target display attribute A, and the target display attribute A is reversely modified to the initial display attribute.

It should be noted that, a conversion order for restoring, after multiple conversions, the ultimate target display attribute to the initial display attribute may be set by the user at the user's discretion, and the conversion order is the second display attribute change rule. The second display attribute change rule may also be a reverse of the first display attribute change rule.

The first modifying module 403 is specifically configured to:
modify a size parameter, a color level parameter or a dynamic parameter in the initial display attribute of the target object, and use the modified size parameter, color level parameter or dynamic parameter as the target display attribute of the target object; or
modify a combination of any two or three of, the size parameter, the color level parameter and the dynamic parameter in the initial display attribute of the target object, and use the combination of any two or three of, the modified size parameter, color level parameter and dynamic parameter as the target display attribute of the target object.

The user can modify the first display attribute change rule at the user's discretion.

It should be noted that the foregoing target objects may further include various target objects, such as a virtual key target object, a text target object, and a folder target object, supported by the terminal, which is not limited in the present invention.

In a technical solution of this embodiment, a terminal device is provided. When a user uses the terminal device, the terminal device can modify a display attribute of a target object according to a predetermined modification or activation rule, and display the target object according to a modified target display attribute. In this way, a display effect of the target object is changed, distinguishability between the target object and another target object is improved, a probability of the user's misoperation caused by low distinguishability between the target objects is reduced, and user experience is enhanced.

### Embodiment 4

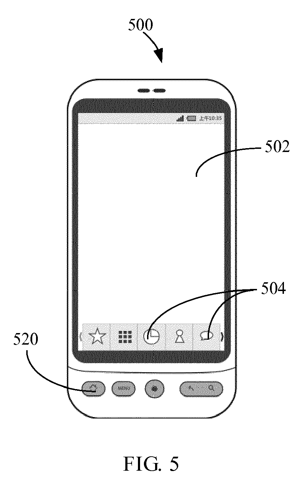

This embodiment of the present invention provides a terminal device 500. Referring to FIG. 5, the terminal device 500 may be a data processing device such as a tablet computer, a personal digital assistant, a cellular phone, a network appliance, a camera, a smart phone, an enhanced general packet radio service (EGPRS) mobile phone, a network base station, a media player, a navigation device, an email device, a game control center, an electronic photo frame, or a data card, or a combination of any two or more of these data processing devices or other data processing devices.

The terminal device 500 includes a touch-sensitive display 502. The touch-sensitive display 502 may be a liquid crystal display (LCD), a light emitting diode (LED), a carbon nanotube display or another display. The touch-sensitive display 502 may be a device that is sensitive to a touch and/or tactile touch of a user and integrates display and touch response functions. The touch-sensitive display 502 may include a multi-point touch-sensitive response function, where the multi-point touch-sensitive response function means that the touch-sensitive display 502 can process multiple concurrent touch points, including processing of data related to pressure, an area and/or a location of each specific touch point. Such a multi-point touch function makes it convenient to use gestures or movements of multiple fingers to interact with the terminal device 500. The terminal device 500 can display one or more graphical user interfaces on the touch-sensitive display 502, so as to provide a user with access to various system objects and convey information to the user. The graphical user interface may include one or more optional objects, that is, display objects. The display object provides, in a graphic manner, the user with a portal for enabling a specific function. The optional objects include a device function, an application, a window, a file, an alarm, an event or other recognizable system objects.

The terminal device 500 can implement functions of multiple devices such as a phone device, an email device, a network data communications device, a Wi-Fi base station device, and a media processing device. In certain implementation manners, a specific display object can be displayed on a menu bar of a user interface. In certain implementation manners, the device functions can be accessed from a top-layer graphical user interface, for example, a function corresponding to the device may be invoked by touching.

In some scenarios, after a specific device function of the terminal device 500 is invoked, the graphical user interface of the terminal device 500 changes, or is enlarged or replaced by another user interface or user interface element to assist the user in accessing and operating a specific function associated with the corresponding device function. For example, in response to the user's touching a phone object, a graphical user interface of the touch-sensitive display 502 may present display objects related to various phone functions. Similarly, touching an email object can make the graphical user interface present display objects related to various email functions; touching a web object may make the graphical user interface present display objects related to a web page browsing function; and touching a media player object may make the graphical user interface present display objects related to various media processing functions.

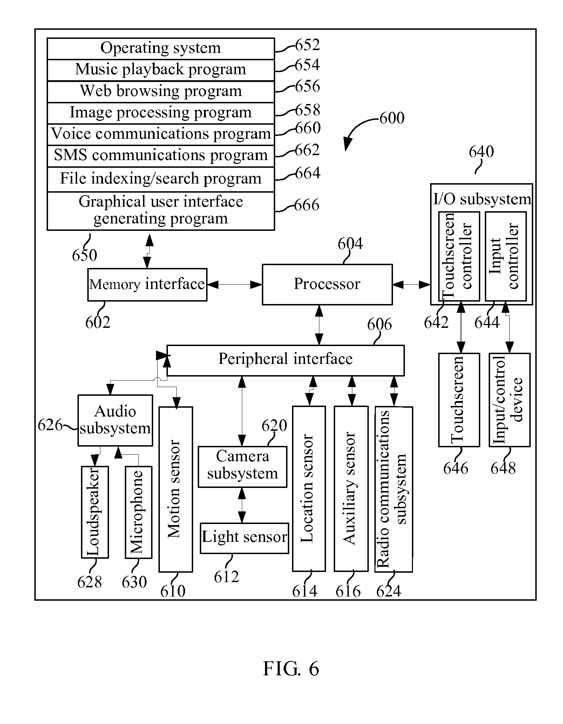

In some other scenarios, an environment or state of the top-layer graphical user interface of the terminal device 500 may be restored by pressing a button 520 near the bottom of the terminal device 500. In some other scenarios, each corresponding device function may have a corresponding "main interface" display object displayed on the touch-sensitive display 502, and a user interface environment may be restored by pressing a "main interface" display object. In some other scenarios, the top-layer graphical user interface of the terminal device 500 may include another target object 506 such as a short message service (SMS) object, a calendar object, a photo object, a camera object, a calculator object, a stocks object, a weather object, a map object, a notepad object, a clock object, an address book object, or a setting object. Touching a map object, for example, can invoke map plotting and a location-based service environment and support function. Similarly, selecting any display object 506 can invoke a corresponding object environment and function. Referring to FIG. 6, FIG. 6 is a system architecture 600 of the terminal device 500 shown in FIG. 5, the system architecture 600 of the terminal device 500 may include a memory interface 602, one or more data processors, image processors and/or central processing units 604 and a peripheral interface 606. The memory interface 602, the one or more processors 604 and/or the peripheral interface 606 may be discrete components or integrated into one or more integrated circuits. Components in the system architecture 600 may be connected by using one or more communications buses or signal cables. A sensor, a device and a subsystem may be connected to the peripheral interface 606 to assist in implementing various functions of the interaction device. For example, a motion sensor 610, a light sensor 612, and a location sensor 614 may be connected to the peripheral interface 606 to assist in implementing functions such as a motion sensing function, an ambient luminance sensing function, and a location sensing function of the interaction device, and may implement specific functions by coordinating with each other. Other auxiliary sensors 616, such as a positioning system (for example, a GPS receiver), a temperature sensor, a biometric sensor, a barometric sensor, and an altitude sensor, may also be connected to the peripheral interface 606 to assist in implementing various relevant functions of the interaction device. The system architecture 600 of the terminal device 500 further includes a camera subsystem 620. The camera subsystem 620 uses the light sensor 612, such as a charge-coupled device CCD or a complementary metal-oxide-semiconductor CMOS light sensor, to assist the camera subsystem in implementing a corresponding image acquiring function. The system architecture 600 of the terminal device 500 further includes a radio communications subsystem 624. The radio communications subsystem 624 enables the interaction device to have a radio communications function. The radio communications subsystem 624 may include a radio frequency receiver and transmitter, and/or an optical (such as infrared) receiver and transmitter. The system architecture of the terminal device 500 further includes an audio subsystem 626. The audio subsystem 626 is used to implement a sound pickup function or an audio signal playback function of the interaction device. The audio subsystem 626 includes a loudspeaker 628 and a microphone 630 to assist in implementing the voice pickup function and the audio signal playback function. The system architecture of the terminal device 500 further includes an I/O subsystem 640. The I/O subsystem 640 enables the terminal device 500 to implement input/output control. The I/O subsystem 640 may include a touchscreen controller 642 and/or other (one or more) input controllers 644. The touchscreen controller 642 can be connected to a touchscreen 646. The touchscreen 646 and the touchscreen controller 642 can use any one of multiple touch-sensitive technologies to detect a touch and movement or interruption of the touch, where the touch-sensitive technologies include but are not limited to capacitive, resistive, infrared and surface acoustic wave technologies, and other proximity sensor arrays or other components that use the touchscreen 646 to implement determining of one or more touch points. The input controller 644 may be connected to other input/control devices 648. The other input/control devices 648 may be one or more buttons, rocker switches, thumb rotary switches, infrared ports, USB ports and/or tap-and-select devices such as a stylus. In addition, the touchscreen 646 may also be used to present a virtual button and/or a keyboard to implement input control on the interaction device. The memory interface 602 of the system architecture 600 of the terminal device 500 may be connected to a memory 650. The memory 650 may be a high-speed random access memory and/or a non-volatile memory, such as one or more disk storage devices, one or more optical storage devices and/or a flash memory. The memory 650 may store an operating system 652, where the operating system 652 may include instructions that are used to process a basic system service and perform a hardware-dependent task. The memory 650 may further store multiple executable programs, where the executable programs may be a music playback program 654, a web browsing program 656, an image processing program 658, a voice communications program 660, an SMS communications program 662, a file indexing/search program 664, a graphical user interface generating program 666, or other applications that have various functions.

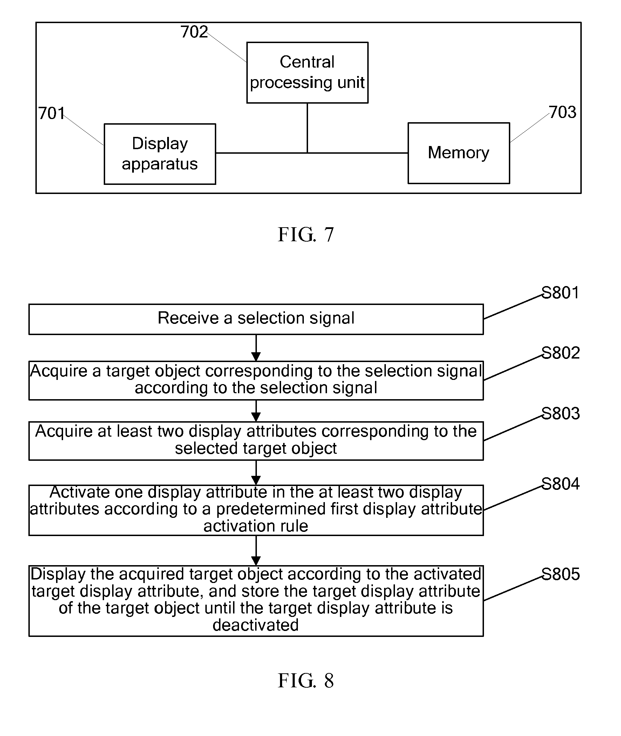

The terminal device 500 is configured to execute and implement the interface display methods provided in Embodiment 1 and Embodiment 2 of the present invention. Specifically, as shown in FIG. 7, by using a display apparatus 701 including the touchscreen controller 642 and the touchscreen 646, and using a central processing unit 702 including the one or more processors 604, the terminal device 500 implements the interface display method provided in the present invention, where:
the central processing unit 702 is configured to receive a selection signal, acquire a target object corresponding to the selection signal according to the selection signal, acquire an initial display attribute of the target object, and modify the initial display attribute of the target object to a target display attribute according to a predetermined first display attribute change rule.

When the user performs an operation on a visible target object, that is, when a user who uses the display apparatus 701 taps a target object on the touchscreen 646, the touchscreen controller 642 receives a coordinate value of the tap of the user, that is, a selection signal, and transmits the coordinate value to the central processing unit 702 including the one or more processors 604, and the central processing unit 702 can acquire a target object corresponding to the selection signal according to the coordinate value.

Generally, the target object refers to a visible object that independently exists and is operable in a software environment, where "operable" means that the object is selectable or can respond to a selection or a click or tap of the user, and the above-mentioned display objects 506 in FIG. 5 are included.

Specifically, according to the selection signal, and by performing certain processing and conversion, the central processing unit 702 can lock the target object of the selection signal as a target object to be operated by the user. When the selection signal is a coordinate value, the central processing unit 702 locks and acquires the target object corresponding to the selection signal according to a correspondence between the coordinate value and the target object, where the correspondence is stored on the terminal device; and according to the predetermined first display attribute change rule, acquires the initial display attribute of the target object and modifies the initial display attribute of the target object to the target display attribute.

It should be noted that the initial display attribute includes at least one or more of: a color attribute, a shape attribute, a size attribute, and a dynamic attribute of the target object. Similarly, the target display attribute includes at least one or more of: the color attribute, the shape attribute, the size attribute, and the dynamic attribute of the target object. The target display attribute is generally different from the initial display attribute.

The display apparatus 701 is configured to display the acquired target object according to the target display attribute.

From the user's perspective, after the user performs an operation on the target object, the display effect of the target object has changed in comparison with that before the operation. For example, the color of the target object has modified, the size has modified, or the target object is jiggling. When entering the display interface of the terminal device next time, the user can notice the previously operated target object at the first moment, which improves distinguishability of the target object, reduces a misoperation probability of the user, and enhances user experience.

It should be noted that a current initial display attribute of the target object may be a target display attribute stored after a previous operation. When no operation has been performed on the target object, the current initial display attribute of the target object is an original display attribute of the target object.

To implement the function of storing the target display attribute, as shown in FIG. 7, the terminal device further includes:
a memory 703, configured to store the target display attribute of the target object.

In this embodiment of the present invention, the memory 703 may be the memory 650 mentioned above.

Further, the central processing unit 702 is further configured to, according to a predetermined second display attribute change rule, acquire the target display attribute of the target object and restore the target display attribute to the initial display attribute.

When the target object has only one target display attribute, that is, when the current target display attribute has been modified only once, that is, the initial display attribute of the target object is its original display attribute, the central processing unit 702 may restore, at one time, the target display attribute of the target object to the initial display attribute of the target display attribute, or the original display attribute, according to the predetermined second display attribute change rule.

When the current target display attribute of the target object is acquired after being modified multiple times, the central processing unit 702 restores, at multiple times, the target display attribute to the initial display attribute of the target display attribute, or the original display attribute, according to the predetermined second display attribute change rule.

Further, the display apparatus 701 is further configured to display the acquired target object according to the initial display attribute.

In this case, the display effect seen by the user is the display effect corresponding to the initial display attribute of the target object.

Further, the memory 703 is further configured to store the initial display attribute of the target object.

To better modify the initial display attribute or the target display attribute, the memory 703 is further configured to store a time point at which the selection signal is received.

The time point at which the selection signal is received may be used as a reference time point for implementing the second display attribute change rule.

Further, the central processing unit 702 is specifically configured to acquire the target display attribute of the target object after the predetermined time range that starts from the time point at which the selection signal is received, and restore the target display attribute of the target object to the initial display attribute.

When the target object has only one target display attribute and the predetermined time range is seven days, the time point at which the user performs the operation on the target object, that is, the time point at which the terminal device receives the corresponding selection signal, is used as a start time point. If the user performs no more operation on this specific target object in seven days after the start time point, the display attribute of the target object is restored by the central processing unit 702 to the initial display attribute, that is, the original display attribute, after the seven days.

When the current target display attribute of the target object is acquired after being modified multiple times, that is, the target object has multiple target display attributes, after the predetermined time range, the central processing unit 702 may restore, at one time, the target display attribute of the target object to the initial display attribute, or ultimately restore, after multiple conversions, the target display attribute of the target object to the initial display attribute.

The predetermined time range may be set by the user. If the user does not set the time range, the central processing unit 702 performs processing according to a time range preset in the terminal device.

Specifically, when the target object has multiple target display attributes, the central processing unit 702 may restore the target display attribute of the target object to the initial display attribute by using at least the following two methods:
Method 1: Successively acquiring target display attributes of the target object at even time intervals within the predetermined time range, and updating the target display attributes at a same modification period until the target display attributes of the target object are restored to the initial display attribute.

It is assumed that the current target display attribute is acquired after the initial display attribute of the current target object is modified five times according to the first display attribute change rule. Specifically, the initial display attribute is modified to a target display attribute A, the target display attribute A is modified to a target display attribute B, the target display attribute B is modified to a target display attribute C, the target display attribute C is modified to a target display attribute D, and the target display attribute D is modified to a target display attribute E. To restore the target display attribute E to the initial display attribute, the central processing unit 702 needs to convert the target display attribute obtained within each predetermined time range after each predetermined time range. The specific conversion of the target display attribute needs to undergo four stages: target display attributes A, B, C, and D, and the target display attributes A, B, C, and D appear in a random order, and the initial display attribute is ultimately restored.
Method 2: Successively acquiring target display attributes of the target object at even time intervals within the predetermined time range, and restoring, in a reverse manner of the first display attribute change rule, a current target display attribute of the target object, which is acquired each time, to a previous target display attribute, until the target display attribute of the target object is restored to the initial display attribute.

It is assumed that the current target display attribute is acquired after the initial display attribute of the current target object is modified five times according to the first display attribute change rule. Specifically, the initial display attribute is modified to a target display attribute A, the target display attribute A is modified to a target display attribute B, the target display attribute B is modified to a target display attribute C, the target display attribute C is modified to a target display attribute D, and the target display attribute D is modified to a target display attribute E. To restore the target display attribute E to the initial display attribute, the central processing unit 702 needs to convert the target display attribute obtained within each predetermined time range after each predetermined time range. Specifically, the target display attribute E is reversely modified to the target display attribute D, the target display attribute D is reversely modified to the target display attribute C, the target display attribute C is reversely modified to the target display attribute B, the target display attribute B is reversely modified to the target display attribute A, and the target display attribute A is reversely modified to the initial display attribute.

It should be noted that, a conversion order for restoring, after multiple conversions, the ultimate target display attribute to the initial display attribute may be set by the user at the user's discretion, and the conversion order is the second display attribute change rule. The second display attribute change rule may also be a reverse of the first display attribute change rule.

That the central processing unit 702 modifies the initial display attribute of the target object to a target display attribute according to a predetermined first display attribute change rule, specifically includes:
modifying a size parameter, a color level parameter or a dynamic parameter in the initial display attribute of the target object, and using the modified size parameter, color level parameter or dynamic parameter as the target display attribute of the target object; or
modifying a combination of any two or three of, the size parameter, the color level parameter and the dynamic parameter in the initial display attribute of the target object, and using the combination of any two or three of, the modified size parameter, color level parameter and dynamic parameter as the target display attribute of the target object.

The target objects include at least a virtual key target object, a text target object, a contact target object, and an icon target object or a picture target object.

In a technical solution of this embodiment, a terminal device is provided. When a user uses the terminal device, a central processing unit of the terminal device can modify an initial display attribute of a selected target object to a target display attribute according to a predetermined first display attribute change rule, and a display apparatus displays the target object according to a modified target display attribute. In this way, a display effect of the target object is changed, distinguishability between the target object and another target object is improved, a probability of the user's misoperation caused by low distinguishability between the target objects is reduced, and user experience is enhanced.

### Embodiment 5

This embodiment of the present invention provides an interface display method. As shown in FIG. 8, the interface display method includes the following steps:
Step S801: Receive a selection signal.

When a user performs an operation on a visible target object, for example, when a user whose terminal device is a personal computer uses a mouse to click a target object, or a user whose terminal device has a touchscreen taps a target object, the terminal device can receive a selection signal corresponding to the user operation. Generally, the selection signal may be a coordinate value on a page currently displayed on the terminal device.

Generally, the target object refers to a visible object that independently exists and is operable in a software environment, where "operable" means that the object is selectable or can respond to a selection or a click or tap of the user.
Step S802: Acquire a target object corresponding to the selection signal according to the selection signal.

According to the selection signal, and by performing certain processing and conversion, the terminal device can lock the target object of the selection signal as a target object to be operated by the user. For example, when the selection signal is a coordinate value, the terminal device locks and acquires the target object corresponding to the selection signal according to a correspondence between the coordinate value and the target object, where the correspondence is stored on the terminal device.
Step S803: Acquire at least two display attributes corresponding to the selected target object.

Assuming that the target object is a name option of a contact, the terminal device can acquire at least two of name option background pictures that are stored on the terminal device. When the number of the acquired background pictures is 2, the two background pictures are named background picture 1 and background picture 2.

In addition, the terminal device can also acquire at least two of name option font types that are stored on the terminal device, which is not limited in the present invention. However, the terminal device can acquire only one of a font type display attribute, a background picture display attribute or another display attribute.

It should be noted that the terminal device may arbitrarily acquire the number of display attributes stored on the terminal device, or may perform the acquiring according to the number preset by the user.

Further, the terminal device may arbitrarily acquire each display attribute stored on the terminal device, or may perform the acquiring according to a rule, for example, according to a size of memory that is occupied by the display attribute in the terminal device, or according to a sequence number or a sorting order of the display attribute, which is not limited in this embodiment of the present invention.
Step S804: Activate one display attribute in the at least two display attributes according to a predetermined first display attribute activation rule.

The terminal device activates one of the at least two selected display attributes randomly or in an activation sequence specified in the first display attribute activation rule of the user. For example, the terminal device may activate the background picture 1 for subsequent use according the foregoing description.
Step S805: Display the acquired target object according to the activated display attribute.

From the user's perspective, after the user performs an operation on the target object, the display effect of the target object has changed in comparison with that before the operation. For example, the selected background picture of the name option of the contact changes to the background picture 1. When entering the display interface of the terminal device next time, the user can notice the previously operated target object at the first moment, which improves distinguishability of the target object, reduces a misoperation probability of the user, and enhances user experience.

In a technical solution of this embodiment, an interface display method is provided. When a user uses a terminal device, the terminal device can, according to a predetermined first display attribute activation rule, acquire at least two display attributes for subsequent use and activate one of the display attributes, and display the acquired target object according to the activated target display attribute. In this way, a display effect of the target object is changed, distinguishability between the target object and another target object is improved, a probability of the user's misoperation caused by low distinguishability between the target objects is reduced, and user experience is enhanced.

### Embodiment 6

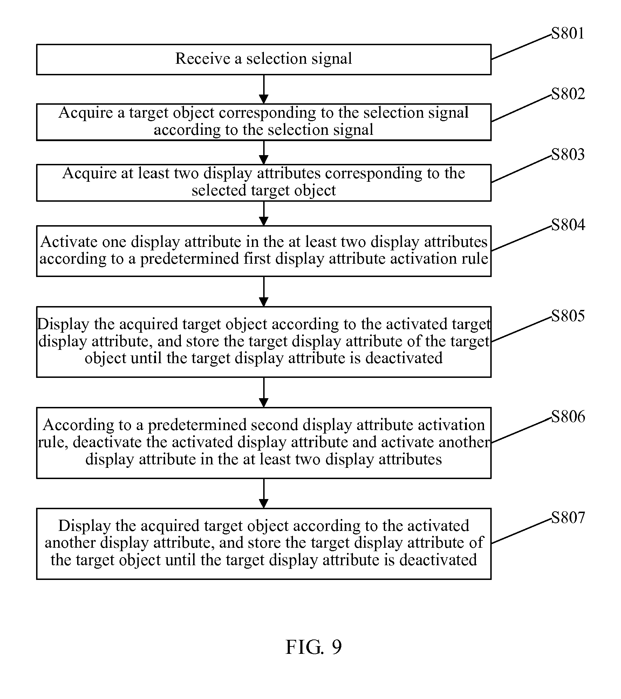

Based on the interface display method disclosed in Embodiment 1, as shown in FIG. 9, the interface display method further includes the following steps:
Step S806: According to a predetermined second display attribute activation rule, deactivate the activated display attribute and activate another display attribute in the at least two display attributes.

The terminal device removes an activation state of the activated display attribute, cancels a display effect change caused by the activation state, and activates the another display attribute in the at least two acquired display attributes according to the predetermined second display attribute activation rule, for example, removes the activation state of the background picture 1 mentioned above, and activates the background picture 2 for subsequent use.

Further, when more than two display attributes are acquired, for example, when the terminal device also acquires a background picture 3, in this case, the terminal device activates the background picture 2 or the background picture 3 for subsequent use according to the predetermined second display attribute activation rule.

It should be noted that, when more than two display attributes are acquired, the display attributes activated by the terminal device after the deactivation may be randomly activated display attributes, or may be display attributes activated in an activation sequence specified in the second display attribute activation rule. For example, to facilitate management of the terminal device, a same type of display attributes that are set in the terminal device generally have continuous numbers, and therefore, the second display attribute activation rule may be set as: the terminal device successively activates the display attributes according to a sequence of the numbers of the acquired display attributes, which is not limited in this embodiment of the present invention.
Step S807: Display the acquired target object according to the activated another display attribute.

In this case, the display effect seen by the user is the display effect corresponding to the another display attribute of the target object. For example, the user may see that the background picture of the name option of the contact mentioned above changes to the background picture 2 or another acquired background picture that is completely different from the background picture 1.

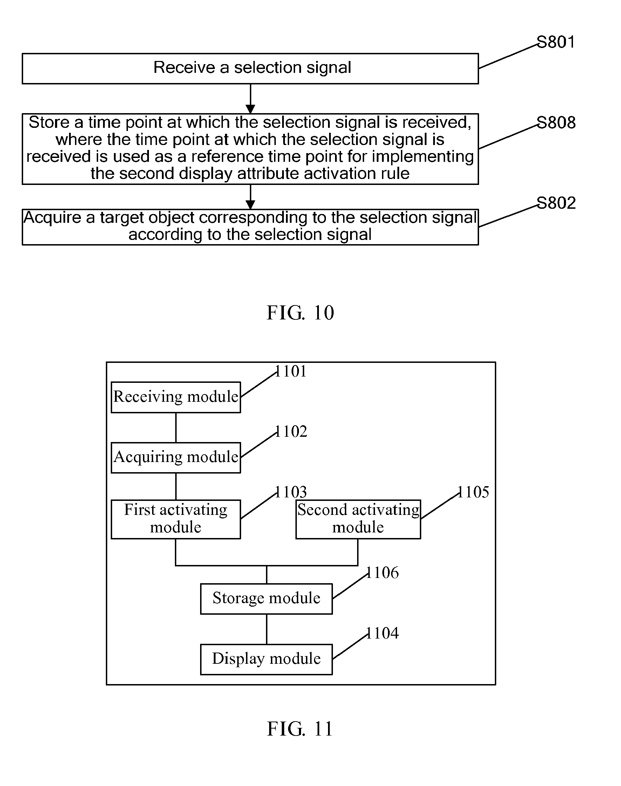

Further, as shown in FIG. 10, between step S801 and step S802, the interface display method further includes:
Step S808: Store a time point at which the selection signal is received.

The time point of the selection signal is used as a reference time point for implementing the second display attribute activation rule.

Therefore, in this case, step S806 may be specifically:
within a predetermined time range that starts from the time point at which the selection signal is received, deactivating the activated display attribute and activating the another display attribute in the at least two display attributes.

Assuming that the predetermined time range is seven days, if the terminal device still receives no selection signal that is sent by the user again in seven days after the time point at which the selection signal is received from the user, the terminal device removes the activation state of the activated display attribute, cancels a display effect change caused by the activation state, and activates the another display attribute in the at least two previously acquired display attributes randomly or in a sequence specified in the predetermined second display attribute activation rule.

The predetermined time range may be set by the user. If the user does not set the time range, the terminal device performs processing according to a time range preset in the terminal device.

At least one attribute in the at least two display attributes includes: a size parameter, a color level parameter or a dynamic parameter of the target object; or a combination of any two or three of, the size parameter, the color level parameter and the dynamic parameter of the target object. Correspondingly, the predetermined first display attribute activation rule includes at least:
modifying the size parameter of the target object, or modifying the color level parameter of the target object, or modifying the dynamic parameter of the target object; or modifying a combination of any two or three of, the size parameter of the target object, the color level parameter of the target object and the dynamic parameter of the target object.

However, it should be noted that the display attributes herein, such as the size parameter, the color level parameter, and the dynamic parameter, are not arbitrarily modified by the terminal device, but are modified according to the display attribute acquired and activated by the terminal device, which is equivalent to that: multiple templates of display effects are stored on the terminal device, and the display effect of the target object can only change from the display effect of one template to the display effect of another template.

The user can modify the first display attribute activation rule at the user's discretion.

Similarly, the predetermined second display attribute activation rule includes at least:
modifying the size parameter of the target object, or modifying the color level parameter of the target object, or modifying the dynamic parameter of the target object; or modifying a combination of any two or three of, the size parameter of the target object, the color level parameter of the target object and the dynamic parameter of the target object.

The user can also modify the second display attribute change rule at the user's discretion.

It should be noted that the foregoing target objects may further include various target objects, such as a virtual key target object, a text target object, and a folder target object, supported by the terminal device, which is not limited in the present invention.

In addition, the terminal device may be an intelligent terminal such as a mobile phone or a computer, or may be a non-terminal, for example, a virtual keyboard.

### Embodiment 7

This embodiment of the present invention provides a terminal device. The terminal device may be a mobile terminal with a touchscreen. As shown in FIG. 11, the terminal device includes the following parts.

A receiving module 1101 is configured to receive a selection signal.

When a user performs an operation on a visible target object, for example, when a user whose terminal device is a personal computer uses a mouse to click a target object, or a user whose terminal device has a touchscreen taps a target object, the receiving module 1101 can receive a selection signal corresponding to the user operation. Generally, the selection signal may be a coordinate value on a page currently displayed on the terminal device.

Generally, the target object refers to a visible object that independently exists and is operable in a software environment, where "operable" means that the object is selectable or can respond to a selection or a click or tap of the user.

An acquiring module 1102 is configured to acquire a target object corresponding to the selection signal according to the selection signal.

According to the selection signal, and by performing certain processing and conversion, the acquiring module 1102 can lock the target object of the selection signal as a target object to be operated by the user. For example, when the selection signal is a coordinate value, the acquiring module 1102 locks and acquires the target object corresponding to the selection signal according to a correspondence between the coordinate value and the target object, where the correspondence is stored on the terminal device.

The acquiring module 1102 is further configured to acquire at least two display attributes corresponding to the selected target object.

Assuming that the target object is a name option of a contact, the acquiring module 1102 may acquire at least two name option background pictures that are stored on the terminal device. When the number of the background pictures acquired by the acquiring module 1102 is 2, the two background pictures are named background picture 1 and background picture 2.

In addition, the acquiring module 1102 may also acquire at least two name option font types that are stored on the terminal device, which is not limited in the present invention. However, the acquiring module 1102 can acquire only one of a font type display attribute, a background picture display attribute or another display attribute.

It should be noted that the acquiring module 1102 may arbitrarily acquire the number of display attributes stored on the terminal device, or may perform the acquiring according to the number preset by the user.

Further, the acquiring module 1102 may arbitrarily acquire each display attribute stored on the terminal device, or may perform the acquiring according to a rule, for example, according to a size of memory that is occupied by the display attribute in the terminal device, or according to a sequence number or a sorting order of the display attribute, which is not limited in this embodiment of the present invention.

A first activating module 1103 is configured to activate one display attribute in the at least two display attributes according to a predetermined first display attribute activation rule.

The first activating module 1103 activates one of the at least two selected display attributes randomly or in an activation sequence specified in the first display attribute activation rule of the user. For example, the first activating module 1103 may activate the background picture 1 for subsequent use according the foregoing description.

A storage module 1104 is configured to display the acquired target object according to the activated target display attribute.

From the user's perspective, after the user performs an operation on the target object, the display effect of the target object has changed in comparison with that before the operation. For example, the selected background picture of the name option of the contact changes to the background picture 1. When entering the display interface of the terminal device next time, the user can notice the previously operated target object at the first moment, which improves distinguishability of the target object, reduces a misoperation probability of the user, and enhances user experience.

Further, as shown in FIG. 11, the terminal device further includes:
a second activating module 1105, configured to, according to a predetermined second display attribute activation rule, deactivate the activated display attribute and activate another display attribute in the at least two display attributes.

The second activating module 1105 removes an activation state of the activated display attribute, cancels a display effect change caused by the activation state, and activates the another display attribute in the at least two acquired display attributes according to the predetermined second display attribute activation rule, for example, removes the activation state of the background picture 1 mentioned above, and activates the background picture 2 for subsequent use.

Further, when more than two display attributes are acquired, for example, when the acquiring module 1102 further acquires a background picture 3, in this case, the second activating module 1105 activates the background picture 2 or the background picture 3 for subsequent use according to the predetermined second display attribute activation rule.

It should be noted that, when more than two display attributes are acquired, the display attributes activated by the second activating module 1105 after the deactivation may be randomly activated display attributes, or may be display attributes activated in an activation sequence specified in the second display attribute activation rule. For example, to facilitate management of the terminal device, a same type of display attributes that are set in the terminal device generally have continuous numbers, and therefore, the second display attribute activation rule may be set as: the terminal device successively activates the display attributes according to a sequence of the numbers of the acquired display attributes, which is not limited in this embodiment of the present invention.

The display module 1104 is further configured to display the acquired target object according to the activated another display attribute.

In this case, the display effect seen by the user is the display effect corresponding to the another display attribute of the target object. For example, the user may see that the background picture of the name option of the contact mentioned above changes to the background picture 2 or another acquired background picture that is completely different from the background picture 1.

Further, the terminal device further includes a storage module, where the storage module 1106 is configured to store a time point at which the selection signal is received.

The time point of the selection signal is used as a reference time point for implementing the second display attribute activation rule.

In this case, the second activating module 1105 is specifically configured to, within a predetermined time range that starts from the time point at which the selection signal is received, deactivate the activated display attribute and activate the another display attribute in the at least two display attributes.

Assuming that the predetermined time range is seven days, if the terminal device still receives no selection signal that is sent by the user again in seven days after the time point at which the selection signal is received from the user, the terminal device removes the activation state of the activated display attribute, cancels a display effect change caused by the activation state, and activates the another display attribute in the at least two previously acquired display attributes randomly or in a sequence specified in the predetermined second display attribute activation rule.

The predetermined time range may be set by the user. If the user does not set the time range, the second activating module 1105 performs processing according to a time range preset in the terminal device.

At least one attribute in the at least two display attributes includes: a size parameter, a color level parameter or a dynamic parameter of the target object; or a combination of any two or three of, the size parameter, the color level parameter and the dynamic parameter of the target object. Correspondingly, the predetermined first display attribute activation rule includes at least:
modifying the size parameter of the target object, or modifying the color level parameter of the target object, or modifying the dynamic parameter of the target object; or modifying a combination of any two or three of, the size parameter of the target object, the color level parameter of the target object and the dynamic parameter of the target object.

However, it should be noted that the display attributes herein, such as the size parameter, the color level parameter, and the dynamic parameter, are not arbitrarily modified by the terminal device, but are modified according to the display attribute acquired and activated by the terminal device, which is equivalent to that: multiple templates of display effects are stored on the terminal device, and the display effect of the target object can only change from the display effect of one template to the display effect of another template.

The user can modify the first display attribute activation rule at the user's discretion.

Similarly, the predetermined second display attribute activation rule includes at least:
modifying the size parameter of the target object, or modifying the color level parameter of the target object, or modifying the dynamic parameter of the target object; or modifying a combination of any two or three of, the size parameter of the target object, the color level parameter of the target object and the dynamic parameter of the target object.

The user can also modify the second display attribute change rule at the user's discretion.

It should be noted that the foregoing target objects may further include various target objects, such as a virtual key target object, a text target object, and a folder target object, supported by the terminal device, which is not limited in the present invention.

In addition, the terminal device may be an intelligent terminal such as a mobile phone or a computer, or may be a non-terminal, for example, a virtual keyboard.

In a technical solution of this embodiment, a terminal device is provided. When a user uses the terminal device, the terminal device can, according to a predetermined first display attribute activation rule, acquire at least two display attributes for subsequent use and activate one of the display attributes, and display the acquired target object according to the activated target display attribute. In this way, a display effect of the target object is changed, distinguishability between the target object and another target object is improved, a probability of the user's misoperation caused by low distinguishability between the target objects is reduced, and user experience is enhanced.

### Embodiment 8

This embodiment of the present invention provides a terminal device 500. Referring to FIG. 5, the terminal device 500 may be a data processing device such as a tablet computer, a personal digital assistant, a cellular phone, a network appliance, a camera, a smart phone, an enhanced general packet radio service (EGPRS) mobile phone, a network base station, a media player, a navigation device, an email device, a game control center, an electronic photo frame, or a data card, or a combination of any two or more of these data processing devices or other data processing devices.

The terminal device 500 is used to implement the interface display methods provided in Embodiment 5 and Embodiment 6 of the present invention. Specifically, as shown in FIG. 7, by using a display apparatus 701 including the touchscreen controller 642 and the touchscreen 646, and using a central processing unit 702 including the one or more processors 604, the terminal device 500 implements the interface display method provided in the present invention, where:
the central processing unit 702 is configured to receive a selection signal, acquire a target object corresponding to the selection signal according to the selection signal, acquire at least two display attributes corresponding to the selected target object, and activate one display attribute in the at least two display attributes according to a predetermined first display attribute activation rule.

When the user performs an operation on a visible target object, that is, when a user who uses the display apparatus 701 taps a target object on the touchscreen 646, the touchscreen controller 642 receives a coordinate value of the tap of the user, that is, a selection signal, and transmits the coordinate value to the central processing unit 702 including the one or more processors 604, and the central processing unit 702 can acquire a target object corresponding to the selection signal according to the coordinate value.

Generally, the target object refers to a visible object that independently exists and is operable in a software environment, where "operable" means that the object is selectable or can respond to a selection or a click or tap of the user, and display objects 506 in FIG. 5 are included.

Specifically, according to the selection signal, and by performing certain processing and conversion, the central processing unit 702 can lock the target object of the selection signal as a target object to be operated by the user. When the selection signal is a coordinate value, the central processing unit 702 locks and acquires the target object corresponding to the selection signal according to a correspondence between the coordinate value and the target object, where the correspondence is stored on the terminal device, and acquires the target object corresponding to the selection signal according to the selection signal. Specifically, assuming that the target object is a name option of a contact, the acquiring module 1002 may acquire at least two name option background pictures that are stored on the terminal device. When the number of the background pictures acquired by the acquiring module 1002 is 2, the two background pictures are named background picture 1 and background picture 2.

Then, one display attribute in the at least two display attributes is activated according to the predetermined first display attribute activation rule.

The display apparatus 701 is configured to display the acquired target object according to the activated target display attribute.

From the user's perspective, after the user performs an operation on the target object, the display effect of the target object has changed in comparison with that before the operation. For example, the selected background picture of the name option of the contact changes to the background picture 1. When entering the display interface of the terminal device next time, the user can notice the previously operated target object at the first moment, which improves distinguishability of the target object, reduces a misoperation probability of the user, and enhances user experience.

To implement the function of storing the target display attribute, as shown in FIG. 7, the terminal device further includes the following:

Further, the central processing unit 702 is also configured to, according to a predetermined second display attribute activation rule, deactivate the activated display attribute and activate another display attribute in the at least two display attributes.

The central processing unit 702 removes an activation state of the activated display attribute, cancels a display effect change caused by the activation state, and activates the another display attribute in at least two acquired display attributes according to the predetermined second display attribute activation rule, for example, removes the activation state of the background picture 1 mentioned above, and activates the background picture 2 for subsequent use.

Further, when more than two display attributes are acquired, for example, when the central processing unit 702 further acquires a background picture 3, in this case, the second activating module 1005 activates the background picture 2 or the background picture 3 for subsequent use according to the predetermined second display attribute activation rule.

It should be noted that, when more than two display attributes are acquired, the display attributes activated by the central processing unit 702 after the deactivation may be randomly activated display attributes, or may be display attributes activated in an activation sequence specified in the second display attribute activation rule. For example, to facilitate management of the terminal device, a same type of display attributes that are set in the terminal device generally have continuous numbers, and therefore, the second display attribute activation rule may be set as: the terminal device successively activates the display attributes according to a sequence of the numbers of the acquired display attributes, which is not limited in this embodiment of the present invention.

Further, the display apparatus 701 is further configured to display the acquired target object according to the activated another display attribute.

In this case, the display effect seen by the user is the display effect corresponding to the another display attribute of the target object. For example, the user may see that the background picture of the name option of the contact mentioned above changes to the background picture 2 or another acquired background picture that is completely different from the background picture 1.

To better activate the display attribute and modify the target display attribute of the target object, the memory 703 is further configured to store a time point at which the selection signal is received. The time point of the selection signal may be used as a reference time point for implementing the second display attribute activation rule.

Further, the central processing unit 702 is specifically configured to within a predetermined time range that starts from the time point at which the selection signal is received, deactivate the activated display attribute and activate the another display attribute in the at least two display attributes.

Assuming that the predetermined time range is seven days, if the terminal device still receives no selection signal that is sent by the user again in seven days after the time point at which the selection signal is received from the user, the terminal device removes the activation state of the activated display attribute, cancels a display effect change caused by the activation state, and activates the another display attribute in the at least two previously acquired display attributes randomly or in a sequence specified in the predetermined second display attribute activation rule.

The predetermined time range may be set by the user. If the user does not set the time range, the central processing unit 702 performs processing according to a time range preset in the terminal device.

At least one attribute in the at least two display attributes includes: a size parameter, a color level parameter or a dynamic parameter of the target object; or a combination of any two or three of, the size parameter, the color level parameter and the dynamic parameter of the target object. Correspondingly, the predetermined first display attribute activation rule includes at least:
modifying the size parameter of the target object, or modifying the color level parameter of the target object, or modifying the dynamic parameter of the target object; or modifying a combination of any two or three of, the size parameter of the target object, the color level parameter of the target object and the dynamic parameter of the target object.

However, it should be noted that the display attributes herein, such as the size parameter, the color level parameter, and the dynamic parameter, are not arbitrarily modified by the terminal device, but are modified according to the display attribute acquired and activated by the terminal device, which is equivalent to that: multiple templates of display effects are stored on the terminal device, and the display effect of the target object can only change from the display effect of one template to the display effect of another template.

The user can modify the first display attribute activation rule at the user's discretion.

Similarly, the predetermined second display attribute activation rule includes at least:
modifying the size parameter of the target object, or modifying the color level parameter of the target object, or modifying the dynamic parameter of the target object; or modifying a combination of any two or three of, the size parameter of the target object, the color level parameter of the target object and the dynamic parameter of the target object.

The user can also modify the second display attribute change rule at the user's discretion.

It should be noted that the foregoing target objects may further include various target objects, such as a virtual key target object, a text target object, and a folder target object, supported by the terminal device, which is not limited in the present invention.

In addition, the terminal device may be an intelligent terminal such as a mobile phone or a computer, or may be a non-terminal, for example, a virtual keyboard.

In a technical solution of this embodiment, a terminal device is provided. When a user uses the terminal device, the terminal device can, according to a predetermined first display attribute activation rule, acquire at least two display attributes for future use and activate one of the display attributes, and display the acquired target object according to the activated target display attribute. In this way, a display effect of the target object is changed, distinguishability between the target object and another target object is improved, a probability of the user's misoperation caused by low distinguishability between the target objects is reduced, and user experience is enhanced.

From the foregoing descriptions of the embodiments, a person skilled in the art may clearly understand that the present invention may be implemented by software in addition to necessary universal hardware or by hardware only. In most circumstances, the former is a preferred implementation.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An interface display method, comprising:
receiving a selection signal;
acquiring a target object corresponding to the selection signal according to the selection signal;
acquiring an initial display attribute of the target object, and modifying the initial display attribute of the target object to a target display attribute according to a predetermined first display attribute change rule; and
displaying the acquired target object according to the target display attribute, and storing the target display attribute of the target object.

2. The method according to claim 1, further comprising:
according to a predetermined second display attribute change rule, acquiring the target display attribute of the target object and restoring the target display attribute to the initial display attribute; and
displaying the acquired target object according to the initial display attribute, and storing the initial display attribute of the target object.

3. The method according to claim 2, further comprising:
storing a time point at which the selection signal is received; and
the according to a predetermined second display attribute change rule, acquiring the target display attribute of the target object and restoring the target display attribute to the initial display attribute, comprise:
acquiring the target display attribute of the target object within a predetermined time range that starts from the time point at which the selection signal is received, and restoring the target display attribute of the target object to the initial display attribute.

4. The method according to claim 3, wherein the acquiring the target display attribute of the target object within a predetermined time range, and restoring the target display attribute of the target object to the initial display attribute, specifically comprise:
successively acquiring the target display attributes of the target object at even time intervals within the predetermined time range, and updating the target display attributes at a same modification period until the target display attributes of the target object are restored to the initial display attribute.

5. The method according to claim 3, wherein the acquiring the target display attribute of the target object within a predetermined time range, and restoring the target display attribute of the target object to the initial display attribute, specifically comprise:
successively acquiring the target display attributes of the target object at even time intervals within the predetermined time range, and restoring, in a reverse manner of the first display attribute change rule, a current target display attribute, of the target object, which is acquired each time, to a previous target display attribute, until the target display attribute of the target object is restored to the initial display attribute.

6. The method according to any one of claims 1 to 5, wherein the modifying the initial display attribute of the target object to a target display attribute according to a predetermined first display attribute change rule comprises:
modifying a size parameter, a color level parameter or a dynamic parameter in the initial display attribute of the target object, and using the modified size parameter, color level parameter or dynamic parameter as the target display attribute of the target object; or
modifying a combination of any two or three of, the size parameter, the color level parameter and the dynamic parameter in the initial display attribute of the target object, and using the combination of any two or three of, the modified size parameter, color level parameter and dynamic parameter as the target display attribute of the target object.

7. The method according to any one of claims 1 to 6, wherein:
the target objects comprise at least a virtual key target object, a text target object, a contact target object, and an icon target object or a picture target object.

8. An interface display method, comprising:
receiving a selection signal;
acquiring a target object corresponding to the selection signal according to the selection signal;
acquiring at least two display attributes corresponding to the selected target object;
activating one display attribute in the at least two display attributes according to a predetermined first display attribute activation rule; and
displaying the acquired target object according to the activated display attribute.

9. The method according to claim 8, further comprising: according to a predetermined second display attribute activation rule, deactivating the activated display attribute and activating another display attribute in the at least two display attributes; and
displaying the acquired target object according to the activated another display attribute.

10. The method according to claim 9, further comprising:
storing a time point at which the selection signal is received; and
the according to a predetermined second display attribute activation rule, deactivating the activated display attribute and activating another display attribute in the at least two display attributes, comprise:
within a predetermined time range that starts from the time point at which the selection signal is received, deactivating the activated display attribute and activating the another display attribute in the at least two display attributes.

11. The method according to any one of claims 8 to 10, wherein at least one attribute in the at least two display attributes comprises:
a size parameter, a color level parameter or a dynamic parameter of the target object; or
a combination of any two or three of, the size parameter, the color level parameter and the dynamic parameter of the target object.

12. The method according to any one of claims 8 to 11, wherein:
the target objects comprises at least a virtual key target object, a text target object, a contact target object, and an icon target object or a picture target object.

13. A terminal device, comprising:
a central processing unit, configured to receive a selection signal, acquire a target object corresponding to the selection signal according to the selection signal, acquire an initial display attribute of the target object, and modify the initial display attribute of the target object to a target display attribute according to a predetermined first display attribute change rule;
a display apparatus, configured to display the acquired target object according to the target display attribute; and
a memory, configured to store the target display attribute of the target object.

14. The terminal device according to claim 13, wherein:
the central processing unit is further configured to, according to a predetermined second display attribute change rule, acquire the target display attribute of the target object and restore the target display attribute to the initial display attribute;
the display apparatus is further configured to display the acquired target object according to the initial display attribute; and
the memory is further configured to store the initial display attribute of the target object.

15. The terminal device according to claim 14, wherein:
the memory is further configured to store a time point at which the selection signal is received; and
the central processing unit is specifically configured to, according to a predetermined second display attribute change rule, acquire the target display attribute of the target object within a predetermined time range that starts from the time point at which the selection signal is received, and restore the target display attribute of the target object to the initial display attribute.

16. The terminal device according to claim 15, wherein the central processing unit is specifically configured to: successively acquire the target display attributes of the target object at even time intervals within the predetermined time range that starts from the time point at which the selection signal is received, and update the target display attributes at a same modification period until the target display attributes of the target object are restored to the initial display attribute.

17. The terminal device according to claim 15, wherein the central processing unit is specifically configured to:
successively acquire the target display attributes of the target object at even time intervals within the predetermined time range that starts from the time point at which the selection signal is received, and restore, in a reverse manner of the first display attribute change rule, a current target display attribute of the target object, which is acquired each time, to a previous target display attribute, until the target display attribute of the target object is restored to the initial display attribute.

18. The terminal device according to claim 13, wherein the central processing unit is specifically configured to:
modify a size parameter, a color level parameter or a dynamic parameter in the initial display attribute of the target object, and use the modified size parameter, color level parameter or dynamic parameter as the target display attribute of the target object; or
modify a combination of any two or three of, the size parameter, the color level parameter and the dynamic parameter in the initial display attribute of the target object, and use the combination of any two or three of, the modified size parameter, color level parameter and dynamic parameter as the target display attribute of the target object.

19. The terminal device according to any one of claims 13 to 18, wherein:
the target objects comprise at least a virtual key target object, a text target object, a contact target object, and an icon target object or a picture target object.

20. A terminal device, comprising:
a central processing unit, configured to receive a selection signal, acquire a target object corresponding to the selection signal according to the selection signal, acquire at least two display attributes corresponding to the selected target object, and activate one display attribute in the at least two display attributes according to a predetermined first display attribute activation rule; and
a display apparatus, configured to display the acquired target object according to the activated target display attribute.

21. The terminal device according to claim 20, wherein:
the central processing unit is further configured to, according to a predetermined second display attribute activation rule, deactivate the activated display attribute and activate another display attribute in the at least two display attributes; and
the display apparatus is further configured to display the acquired target object according to the activated another display attribute.

22. The terminal device according to claim 21, wherein:
the memory is further configured to store a time point at which the selection signal is received; and
the central processing unit is specifically configured to, within a predetermined time range that starts from the time point at which the selection signal is received, deactivate the activated display attribute and activate the another display attribute in the at least two display attributes.

23. The terminal device according to any one of claims 20 to 22, wherein at least one attribute in the at least two display attributes comprises:
a size parameter, a color level parameter or a dynamic parameter of the target object; or
a combination of any two or three of, the size parameter, the color level parameter and the dynamic parameter of the target object.

24. The terminal device according to any one of claims 20 to 23, wherein:
the target objects comprise at least a virtual key target object, a text target object, a contact target object, and an icon target object or a picture target object.

25. A terminal device, comprising:
a receiving module, configured to receive a selection signal;
an acquiring module, configured to acquire a target object corresponding to the selection signal according to the selection signal;
a first modifying module, configured to acquire an initial display attribute of the target object, and modify the initial display attribute of the target object to a target display attribute according to a predetermined first display attribute change rule; and
a display and storage module, configured to display the acquired target object according to the target display attribute, and store the target display attribute of the target object.

26. The terminal device according to claim 25, further comprising:
a second modifying module, configured to, according to a predetermined second display attribute change rule, acquire the target display attribute of the target object and restore the target display attribute to the initial display attribute; wherein
the display and storage module is further configured to display the acquired target object according to the initial display attribute, and store the initial display attribute of the target object.

27. The terminal device according to claim 26, wherein:
the display and storage module is further configured to store a time point at which the selection signal is received; and
the second modifying module is specifically configured to acquire the target display attribute of the target object within a predetermined time range that starts from the time point at which the selection signal is received, and restore the target display attribute of the target object to the initial display attribute.

28. The terminal device according to claim 27, wherein the second modifying module is specifically configured to:
successively acquire the target display attributes of the target object at even time intervals within the predetermined time range that starts from the time point at which the selection signal is received, and update the target display attributes at a same modification period until the target display attributes of the target object are restored to the initial display attribute.

29. The terminal device according to claim 27, wherein the second modifying module is specifically configured to:
successively acquire the target display attributes of the target object at even time intervals within the predetermined time range that starts from the time point at which the selection signal is received, and restore, in a reverse manner of the first display attribute change rule, a current target display attribute of the target object, which is acquired each time, to a previous target display attribute, until the target display attribute of the target object is restored to the initial display attribute.

30. The terminal device according to claim 25, wherein the first modifying module is specifically configured to:
modify a size parameter, a color level parameter or a dynamic parameter in the initial display attribute of the target object, and use the modified size parameter, color level parameter or dynamic parameter as the target display attribute of the target object; or
modify a combination of any two or three of, the size parameter, the color level parameter and the dynamic parameter in the initial display attribute of the target object, and use the combination of any two or three of, the modified size parameter, color level parameter and dynamic parameter as the target display attribute of the target object.

31. The method according to any one of claims 25 to 30, wherein:
the target objects comprise at least a virtual key target object, a text target object, a contact target object, and an icon target object or a picture target object.

32. A terminal device, comprising:
a receiving module, configured to receive a selection signal;
an acquiring module, configured to acquire a target object corresponding to the selection signal according to the selection signal, and acquire at least two display attributes corresponding to the selected target object;
a first activating module, configured to activate one display attribute in the at least two display attributes according to a predetermined first display attribute activation rule; and
a display module, configured to display the acquired target object according to the target display attribute.

33. The terminal device according to claim 32, further comprising:
a second activating module, configured to, according to a predetermined second display attribute activation rule, deactivate the activated display attribute and activate another display attribute in the at least two display attributes, wherein
the display module is further configured to display the acquired target object according to the activated another display attribute.

34. The terminal device according to claim 33, further comprising: a storage module, wherein
the storage module is configured to store a time point at which the selection signal is received; and
the second activating module is specifically configured to, within a predetermined time range that starts from the time point at which the selection signal is received, deactivate the activated display attribute and activate the another display attribute in the at least two display attributes.

35. The terminal device according to claims 32 to 34, wherein at least one attribute in the at least two display attributes comprises:
a size parameter, a color level parameter or a dynamic parameter of the target object; or
a combination of any two or three of, the size parameter, the color level parameter and the dynamic parameter of the target object.

36. The terminal device according to any one of claims 32 to 35, wherein the target objects comprise at least a virtual key target object, a text target object, a contact target object, and an icon target object or a picture target object.
